# EUROPÄISCHE PATENTSCHRIFT

(11) **EP 0 624 029 B1**
(45) Veröffentlichungstag und Bekanntmachung des Hinweises auf die Patenterteilung: **21.07.1999**
(21) Anmeldenummer: 94106953.6
(22) Anmeldetag: 04.05.1994
(51) Int. Cl.: H04N 5/46, H04N 3/27

(54) **Fernsehempfänger zum Empfang und zur Wiedergabe von Fernsehsignalen mit unterschiedlichen Vertikalen Abtastfrequenzen**
Television receiver for the reception and reproduction of television signals with different vertical scanning frequencies
Récepteur de télévision pour la réception et la reproduction de signaux de télévision avec des fréquences de balayage verticale distinctes

(30) Priorität: 07.05.1993 DE 4315230
(43) Veröffentlichungstag der Anmeldung: 09.11.1994
(73) Patentinhaber: GRUNDIG Aktiengesellschaft, 90762 Fürth (DE)
(72) Erfinder: Gramss, Steffen, GRUNDIG E.M.V., D-90748 Fürth (DE); Rosenberger, Winfried, GRUNDIG E.M.V., D-90748 Fürth (DE)

(56) Entgegenhaltungen:
- EP-A- 0 142 244
- EP-A- 0 196 607
- EP-A- 0 314 873
- EP-A- 0 393 352
- FR-A- 2 669 171
- US-A- 4 365 270
- US-A- 5 087 977
- IEEE TRANSACTIONS ON CONSUMER ELECTRONICS, Bd.35, Nr.3, 30. August 1989, NEW YORK US Seiten 315 - 318, XP000065826 BERLAND P.A. ET AL 'MULTI SCANNING TV PROCESSOR IC'

## Beschreibung

Die Erfindung betrifft einen Fernsehempfänger zum Empfang und zur Wiedergabe von Fernsehsignalen mit unterschiedlichen Vertikalfrequenzen mit den im Oberbegriff des Anspruchs 1 angegebenen Merkmalen.

Aus US-A-4,365,270 ist ein Femsehempfänger zum Empfang und Wiedergabe von Femsehsignalen mit unterschiedlichen Vertikalfrequenzen bekannt. Der Femsehempfänger enthält eine Schaltung zur Erkennung der Vertikalfrequenz der empfangenen Signale, an deren Ausgang ein für die Vertikalfrequenz charakteristisches Kennsignal zur Verfügung steht, das einer Vertikalablenkschaltung zugeführt wird.

Aus der DE-A1-37 37 581 ist eine Einrichtung zum automatischen Anlegen der Abgleichspannungen an die abstimmbaren Schaltungselemente des ZF-Verstärkers eines Fernsehempfängers bekannt. Die bekannte Einrichtung weist einen nichtflüchtigen Speicher zur Abspeicherung von programmplatzbezogenen Kennsignalen für die Normen der den einzelnen Programmplatzwahltasten zugeordneten Sender und einen Mikroprozessor auf, welcher nach Betätigung einer Kanalwahltaste das der gewählten Kanalwahltaste zugeordnete Kennsignal aus dem Speicher ausliest. Dieses Kennsignal wird zur Adressierung eines Speichers verwendet, in welchem Digitalwörter abgespeichert sind, die Abgleichspannungen entsprechen.

Ein Fernsehempfänger zum Empfang und zur Wiedergabe von Fernsehsignalen mit unterschiedlichen Vertikalfrequnzen ist aus der Firmenschrift Valvo-TI 841221: Die Horizontal-Vertikal-Kombination TDA 2579 bekannt. Dieser weist einen kombinierte Horizontal-Vertikal-Baustein auf, der in Form einer integrierten Schaltung realisiert ist. Die Aufgabe dieser Horizontal-Vertikal-Kombination besteht im wesentlichen darin, aus den im Fernsehsignal enthaltenen Synchronimpulsen Horizontal- und Vertikalablenksignale für die Horizontal- bzw. Vertikalablenkstufe des Fernsehempfängers zu erzeugen. Im TDA 2579 ist dazu unter anderem eine Schaltung zur Erkennung der Norm und damit der Vertikalfrequenz des jeweils empfangenen Signals enthalten, an deren Ausgang ein für die jeweilige Vertikalfrequenz charakteristisches Kennsignal zur Verfügung steht. Dieses Kennsignal wird unter anderem einer Amplitudenanpassungsschaltung zugeführt, an deren Ausgang Vertikalablenksignale erzeugt werden, deren Amplituden unabhängig von der jeweiligen Vertikalfrequenz gleich sind. Ein Nachteil derartiger Fernsehempfänger besteht darin, daß zu der im TDA 2579 durchgeführten Normerkennung eine bestimmte Zeit benötigt wird, innerhalb deren nach einem Programmumschaltvorgang dann, wenn der Programmumschaltvorgang mit einem Wechsel der Vertikalfrequenz, beispielsweise von 60 Hz auf 50 Hz, verbunden ist, ein Bildamplitudenausgleichsvorgang stattfindet, der für den Betrachter störend ist.

Die Aufgabe der Erfindung besteht darin, einen Fernsehempfänger mit den im Oberbegriff des Anspruchs 1 angegebenen Merkmalen derart weiterzubilden, daß der obengenannte Nachteil nicht mehr auftritt.

Diese Aufgabe wird bei einem Fernsehempfänger mit den im Oberbegriff des Anspruchs 1 angegebenen Merkmalen durch die im kennzeichnenden Teil des Anspruchs 1 angegebenen Merkmale gelöst.

Vorteilhafte Weiterbildungen der Erfindung sind in den abhängigen Ansprüchen angegeben.

Die Vorteile der Erfindung bestehen insbesondere darin, daß in einem Fernsehempfänger mit den beanspruchten Merkmalen sofort nach einer Programmplatzanwahl ein Kennsignal für die Vertikalfrequenz der angewählten Fernsehsendung zur Verfügung steht und demnach die Vertikalfrequenz nicht erst gemessen werden muß. Dieses Kennsignal wird verzögerungsfrei der Amplitudenanpassungsschaltung zugeführt, so daß verzögerungsfrei Vertikalablenksignale der richtigen Amplitude zur Verfügung stehen. Ein für den Betrachter störender Bildamplitudenausgleichsvorgang findet nicht statt.

Ein weiterer Vorteil der Erfindung besteht darin, daß in Fernsehempfängern zum Empfang und zur Wiedergabe von Fernsehsignalen mit unterschiedlichen Vertikalfrequenzen auch integrierte Ablenkschaltungen, bei denen eine Erkennung der Norm des empfangenen Signals nicht vorgesehen ist, verwendet werden können.

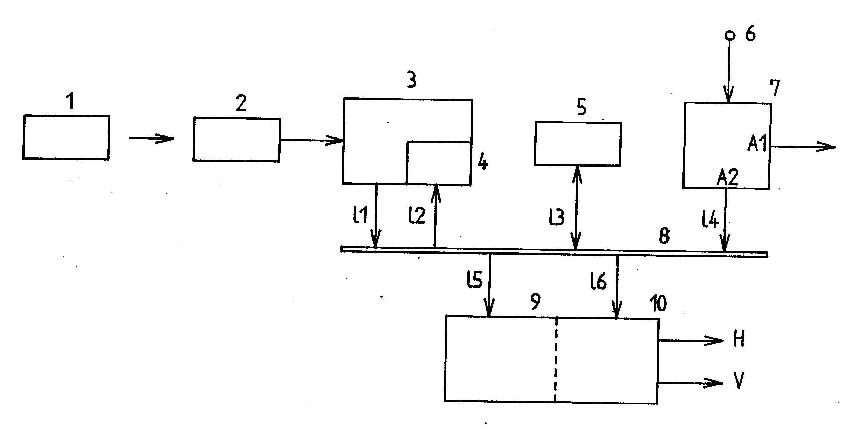

Weitere vorteilhafte Eigenschaften der Erfindung ergeben sich aus der Erläuterung eines Ausführungsbeispiels anhand der Figur.

Diese zeigt ein Blockschaltbild mit den zum Verständnis der Erfindung nötigen Bauteilen eines Fernsehempfängers. Der gezeigte Fernsehempfänger weist auf: einen Fernbedienungsgeber 1, einen Fernbedienempfänger 2, einen Mikroprozessor 3 mit einem Timer 4, einen nichtflüchtigen Speicher 5, einen Antenneneingang 6, eine Eingangsschaltung 7 mit einem Tuner und einem Zwischenfrequenzteil, einen Datenbus 8 und einen Ablenkprozessor 9 mit einer Amplitudenanpassungsschaltung 10.

Der in der Figur gezeigte Fernsehempfänger arbeitet wie folgt:
Mittels der Zifferntastatur des Fernbedienungsgebers 1 wird ein gewünschter Programmplatz angewählt. Dieser Befehl wird zum Fernbedienungsempfänger 2 übertragen und von dort aus dem Mikroprozessor zugeführt. Dieser überprüft zunächst nach Adressierung des nichtflüchtigen Speichers 5, ob dort bereits ein dem angewählten Programmplatz zugeordnetes Kennsignal für die Vertikalfrequenz der über den angewählten Programmplatz empfangbaren Fernsehsendung abgespeichert ist oder nicht.

Ist das der Fall, dann wird dieses Kennsignal für die Vertikalfrequenz aus dem nichtflüchtigen Speicher ausgelesen und über die Signalverbindung l₃, den Datenbus 8 und die Signalverbindung l₆ der Amplitudenanpassungsschaltung 10 zugeführt. Dieser steht demnach das Kennsignal für die Vertikalfrequenz nach der Programmplatzwahl verzögerungsfei zur Verfügung.

Weiterhin werden aus dem über den Antenneneingang 6 der Eingangsschaltung 7 zugeführten Signal, welches am Ausgang A1 als Basisbandsignal vorliegt, die Synchronimpulse abgetrennt und über die Signalverbindung l₄, den Datenbus 8 und die Signalverbindung l₅ dem Ablenkprozessor 9 zugeführt. Dieser erzeugt aus den abgetrennten Synchronimpulsen sägezahnförmige Horizontal- und Vertikalablenksignale, welche der Amplitudenanpassungsschaltung 10 zugeführt werden. Diese enthält einen Spannungsteiler, dessen Teilungsverhältnis in Abhängigkeit vom Kennsignal für die Vertikalfrequenz derart einstellbar ist, daß die am Ausgang der Amplitudenanpassungsschaltung 10 zur Verfügung stehenden Vertikalablenksignale unabhängig von der Vertikalfrequenz des jeweils vorliegenden Fernsehsignals gleich sind, so daß bei der Signaldarstellung am Bildschirm stets die volle Bildhöhe ausgeschrieben wird.

Ist am adressierten Speicherplatz des nichtflüchtigen Speichers 5 hingegen noch kein dem angewählten Programmplatz zugeordnetes Kennsignal für die Vertikalfrequenz abgespeichert, dann erfolgt zunächst eine Messung dieser Vertikalfrequenz. Dazu werden die aus dem empfangenen Signal abgeleiteten Synchronimpulse über die Signalverbindung l₂ dem Timer 4 des Mikroprozessors 3 zugeführt. Der Mikroprozessor 3 erzeugt das für die gemessene Vertikalfrequenz charakteristische Kennsignal und leitet dessen Abspeicherung über die Signalverbindung l₁, den Datenbus 8 und die Signalverbindung l₃ an dem dem angewählten Programmplatz zugeordneten Speicherplatz des nichtflüchtigen Speichers 5 ein. Weiterhin wird dieses Kennsignal über die Signalverbindung l₆ der Amplitudenanpassungsschaltung 10 zugeführt, so daß auch in diesem Fall Vertikalsynchronsignale der richtigen Amplitude erzeugt werden.

Gemäß einer vorteilhaften Weiterbildung der Erfindung erfolgt die Abspeicherung der Kennsignale für die Vertikalfrequenzen der empfangbaren Sender bei einer selbständigen Senderprogrammierung des Fernsehempfängers. Diese wird vom Mikroprozessor 3 entweder automatisch nach der ersten Inbetriebnahme des Fernsehempfängers eingeleitet oder in Ansprache auf einen mittels des Fernbedienungsgebers 1 eingegebenen Bedienbefehl durchgeführt. Dabei wird mittels des Timers 4 für jeden empfangbaren Sender die Vertikalfrequenz gemessen und ein Kennsignal für die gemessene Vertikalfrequenz an einem dem jeweiligen Sender zugeordneten Speicherplatz des nichtflüchtigen Speichers 5 abgelegt.

Bei einem Fernsehempfänger gemäß der Erfindung ist somit für jedes Fernsehprogramm die Messung der Vertikalfrequenz nur ein einziges Mal nowendig. Danach steht für alle weiteren Programmanwahlvorgänge ein Kennsignal für die jeweilige Vertikalfrequenz verzögerungsfrei zur Verfügung, so daß ein für den Betrachter störender Bildamplitudenausgleichsvorgang nicht stattfinden muß.

## Patentansprüche

1. Fernsehempfänger zum Empfang und zur Wiedergabe von Fernsehsignalen mit unterschiedlichen Vertikal frequenzen mit
- einer Bedieneinheit mit Programmplatzwahltasten,
- einer Eingangsschaltung, an deren Ausgang die aus dem empfangenen Signal abgeleiteten Synchronsignale zur Verfügung stehen,
- einem Mikroprozessor,
- einem Ablenkprozessor zur Erzeugung von Horizontal-. und Vertikalablenksignalen, und
- einer Amplitudenanpassungsschaltung, der die Vertikalablenksignale zugeführt werden und an deren Ausgang Vertikalablenksignale zur Verfügung stehen, deren Amplituden unabhängig von der jeweiligen Vertikalfrequenz gleich sind,
**dadurch gekennzeichnet, daß**
- er weiterhin einen nichtflüchtigen Speicher (5) mit einer Vielzahl von Speicherplätzen zur Abspeicherung von programmplatzbezogenen Kennsignalen für die Vertikal frequenzen der den einzelnen Programmplatzwahltasten zugeordneten Sender aufweist,
- der Mikroprozessor (3) nach der ersten Inbetriebnahme des Fernsehempfängers automatisch oder in Ansprache auf einen mittels der Bedieneinheit (1,2) eingegebenen Befehl eine selbständige Senderprogrammierung des Fernsehempfängers auslöst, bei der für jeden ermittelten Sender die Vertikal frequenz mittels eines Timers (4) gemessen wird und an einem dem jeweiligen Sender zugeordneten Speicherplatz des nichtflüchtigen Speichers (5) ein Kennsignal für die gemessene Vertikalfrequenz abgelegt wird, und
- der Mikroprozessor (3) in Ansprache auf die Betätigung einer Programmplatzwahltaste den dieser zugeordneten Speicherplatz des nichtflüchtigen Speichers (5) adressiert, so daß das der jeweiligen Programmplatzwahltaste zugehörige Kennsignal für die Vertikalfrequenz aus dem nichtflüchtigen Speicher ausgelesen und der Amplitudenanpassungsschaltung (10) zugeführt wird.

2. Fernsehempfänger nach Anspruch 1,
**dadurch gekennzeichnet,** daß
der Mikroprozessor (3) nach Betätigung einer Programmplatzwahltaste überprüft, ob an dem der Programmplatzwahltaste zugeordneten Speicherplatz des nichtflüchtigen Speichers (5) bereits ein Kennsignal für die Vertikalfrequenz abgespeichert ist oder nicht, und wenn dies nicht der Fall ist, die Messung der Vertikal frequenz mittels des Timers (4) auslöst und die Abspeicherung eines der gemessenen Vertikal frequenz zugeordneten Kennsignals am genannten Speicherplatz steuert.

## Claims

1. Television receiver for the reception and reproduction of television signals with different field frequencies, comprising
- an operating unit having programme location selection keys,
- an input circuit at whose output the synchronization signals derived from the received signal are available,
- a microprocessor,
- a deflection processor for generating horizontal-deflection and vertical-deflection signals, and
- an amplitude adjustment circuit to which the vertical-deflection signals are fed and at whose output vertical-deflection signals are available whose amplitudes are identical regardless of the respective field frequency,
characterized in that
- it furthermore comprises a nonvolatile memory (5) having a multiplicity of memory locations for storing programme-location identification signals for the field frequencies of the transmitters assigned to the individual programme location selection keys,
- the microprocessor (3) initiates, after the television receiver is first commissioned, automatically or in response to a command entered by means of the operating unit (1, 2) a spontaneous transmitter programming of the television receiver in which the field frequency is measured for each transmitter detected by means of a timer (4) and an identification signal for the measured field frequency is stored at a memory location of the nonvolatile memory (5) assigned to the respective transmitter, and
- the microprocessor (3) addresses, in response to the actuation of a programme location selection key, the memory location of the nonvolatile memory (5) assigned to the latter so that the identification signal for the field frequency associated with the respective programme location selection key is read out of the nonvolatile memory and is fed to the amplitude adjustment circuit (10).

2. Television receiver according to Claim 1,
characterized in that, after actuation of a programme location selection key, the microprocessor (3) checks whether an identification signal for the field frequency is already stored at the memory location of the nonvolatile memory (5) assigned to the programme location selection key or not and, if this is not the case, the measurement of the field frequency is initiated by means of the timer (4) and the storage of an identification signal assigned to the measured field frequency is controlled at the said memory location.

## Revendications

1. Récepteur de télévision pour la réception et la reproduction de signaux de télévision ayant des fréquences d'images différentes, comportant
- une unité de commande comportant des touches de sélection d'emplacements de programme,
- un circuit d'entrée, à la sortie duquel sont disponibles les signaux de synchronisation qui sont dérivés du signal reçu,
- un microprocesseur,
- un processeur de balayage pour produire des signaux de déviation horizontale et de déviation verticale, et
- un circuit d'adaptation d'amplitude, auquel sont envoyés les signaux de déviation verticale et à la sortie duquel sont disponibles des signaux de déviation verticale, dont les amplitudes sont identiques indépendamment de la fréquence d'images respective,
caractérisé en ce que
- il comporte en outre une mémoire non volatile (5) possédant une multiplicité d'emplacements de mémoire pour la mémorisation de signaux caractéristiques rapportés à des emplacements de programme, pour les fréquences d'images des émetteurs associés aux différentes touches de sélection d'emplacements de programme,
- après la première mise en service du récepteur de télévision, le microprocesseur (3) déclenche automatiquement ou en réponse à une commande introduite au moyen de l'unité de commande (1,2), une programmation automatique d'émetteurs dans le récepteur de télévision, lors de laquelle pour chaque émetteur déterminé, la fréquence d'images est mesurée au moyen d'une horloge (4) et un signal caractéristique pour la fréquence d'images mesurée est mémorisé en un emplacement, associé à l'émetteur respectif, de la mémoire non volatile (5), et
- en réponse à l'actionnement d'une touche de sélection d'emplacements de programme, le microprocesseur (3) adresse l'emplacement, qui est associé à cette touche, de la mémoire non volatile (5) de sorte que le signal caractéristique associé à la touche respective de sélection d'emplacements de programmes, pour la fréquence d'images est lu dans la mémoire non volatile et est envoyé au circuit d'adaptation d'amplitude (10).

2. Récepteur de télévision selon la revendication 1, caractérisé en ce que
après actionnement d'une touche de sélection d'emplacements de programme, le microprocesseur (3) vérifie si à l'emplacement, associé à la touche de sélection d'emplacements de programme de la mémoire non volatile (5), est déjà mémorisé ou non un signal caractéristique pour la fréquence d'images et, lorsque ce n'est pas le cas, déclenche la mesure de la fréquence d'images à l'aide de l'horloge (4) et commande la mémorisation d'un signal caractéristique, associé à la fréquence d'images mesurée, audit emplacement de mémoire.
